# EUROPÄISCHE PATENTSCHRIFT

(11) **EP 1 451 457 B1**
(45) Veröffentlichungstag und Bekanntmachung des Hinweises auf die Patenterteilung: **09.04.2008**
(21) Anmeldenummer: 02787809.9
(22) Anmeldetag: 25.11.2002
(51) Int. Cl.: F02B 63/04, F02B 63/06

(54) **ANTRIEB VON HILFSAGGREGATEN**
DRIVING OF ANCILLARY UNITS
MECANISME D'ENTRAINEMENT POUR UNITES AUXILIAIRES

(30) Priorität: 28.11.2001 DE 10159210
(43) Veröffentlichungstag der Anmeldung: 01.09.2004
(73) Patentinhaber: Volkswagen AG, 38436 Wolfsburg (DE)
(72) Erfinder: HOFMANN, Lars, 38448 Wolfsburg (DE); PETERSEN, Rainer, 38444 Wolfsburg (DE)
(74) Vertreter: Patentanwälte Bressel und Partner
(86) Internationale Anmeldenummer: PCT/EP2002/013246
(87) Internationale Veröffentlichungsnummer: WO 2003/046350

(56) Entgegenhaltungen:
- DE-A- 10 001 436
- DE-A- 19 513 710
- DE-A- 19 932 061
- DE-A- 19 941 705

## Beschreibung

Die Erfindung betrifft ein Verfahren und eine Vorrichtung zum Antrieb von Hilfsaggregaten, insbesondere bei Kraftfahrzeugen, mit mindestens einem Antriebsgetriebe, welches über eine lösbare mechanische Verbindung mit einer Verbrennungskraftmaschine koppelbar ist.

Aus der DE-197 38 250 C2 ist eine Kraftfahrzeugklimaanlage mit einer Kompressoreinheit bekannt, wobei die Kompressoreinheit mechanisch zum einen mit dem Kraftfahrzeugsantriebsaggregat und zum anderen mit einem Zusatzantriebsaggregat koppelbar ist, als Kompressoreinheit eine solche verwendet ist, deren Kältemittelfördermenge bei gegebener Drehzahl der zugehörigen Antriebswelle abregelbar ist, und als Zusatzantriebsaggregat ein umschaltbares Motor-lGeneratoraggregat vorgesehen ist, das im Motorbetrieb als Antrieb für die Kompressoreinheit und im Generatorbetrieb zur Erzeugung elektrischer Energie aus der mechanische Energie des Kraftfahrzeugaggregates dient. lm Fahrbetrieb wird bei aktivierter Kupplung die Kompressoreinheit direkt über den Kraftfahrzeugmotor angetrieben. Um in diesem Fall eine Fördermengen-Leistungsregelung der Kompressoreinheit zu ermöglichen, die unabhängig von ihrer Wellendrehzahl ist, ist eine Abregelbarkeit der Käitemittelfördermenge der Kompressoreinheit vorgesehen.

Außerdem ist aus der DE-199 53 857 A1 eine Betriebsvorrichtung bekannt, insbesondere zum Betreiben von Fahrzeugen, mit mehreren Komponenten, die zumindest eine sowohl als Generator als auch als Elektromotor betreibbare elektrische Einheit sowie ein thermisches Aggregat zur Umwandlung von mechanischer Energie in Wärmeenergie umfassen, wobei die Komponenten mechanisch miteinander koppelbar sind und die mechanischen Verbindungen jeweils durch Kupplungen wahlweise herstellbar oder lösbar sind. Der Antrieb des thermischen Aggregates kann auch über eine Verbrennungskraftmaschine erfolgen, welche über ein Kupplungselement mit der elektrischen Einheit mechanisch verbindbar ist. Die elektrische Einheit wird in diesem Fall lediglich für eine Kraftübertragung genutzt. Um eine unmittelbare Abhängigkeit von der Drehzahl der Verbrennungsmaschine zu vermeiden, kann eine Übersetzungsgetriebeeinheit zwischen der elektrischen Einheit und der Verbrennungskraftmaschine angeordnet sein. Die Betriebsvorrichtung ist in ihrer bevorzugten Ausführungsform an dem vom Schwungrad, d.h. von einem Antriebsgetriebe, abgewendeten Ende der Kurbelwelle angeordnet.

Aus der DE 100 01 436 A1 ist eine Vorrichtung für den Antrieb von Hilfsaggregaten, insbesondere bei Kraftfahrzeugen, bekannt, mit mindestens einem Antriebsgetriebe, wobei das Antriebsgetriebe über eine lösbare mechanische Verbindung mit einer das Antriebsgetriebe antreibenden Verbrennungskraftmaschine koppelbar ist, umfassend mindestens eine Elektromaschine, wobei die Elektromaschine sowohl als Elektromotor als auch als Generator betreibbar ist, die Elektromaschine mit mindestens einem Hilfsaggregat über eine mechanische Verbindung antriebskoppelbar ist und mit mindestens einer mechanischen Verbindung zu der Verbrennungskraftmaschine ausgebildet ist, wobei die Verbindung mindestens derart herstellbar ist, dass die Elektromaschine durch die Verbrennungskraftmaschine antreibbar ist, und die Verbindung mindestens derart lösbar ist, dass keine Bewegung von der Elektromaschine auf die Verbrennungskraftmaschine übertragen wird, die Elektromaschine mit mindestens einer mechanischen Verbindung zu dem Antriebsgetriebe ausgebildet ist, wobei die Verbindung wahlweise lösbar und herstellbar ist und durch Herstellen oder Lösen der jeweiligen mechanischen Verbindungen ein Antrieb des Hilfsaggregates elektromotorisch, verbrennungsmotorisch oder kinematisch unter Schwungsausnutzung sowie durch Kombinationen realisiert wird.

Der Erfindung liegt das technische Problem zugrunde, ein Verfahren und eine Vorrichtung zum Antrieb von Hilfsaggregaten zu schaffen, insbesondere bei Kraftfahrzeugen, mit mindestens einem Antriebsgetriebe, welches über eine lösbare mechanische Verbindung mit einer Verbrennungskraftmaschine koppelbar ist, derart, dass in unterschiedlichen Fahrzeugbetriebsarten ein zuverlässiger Betrieb des Hilfsaggregats bei optimaler Energieausnutzung gegeben ist und die Anzahl der im Kraftfahrzeug einzusetzenden Komponenten möglichst gering ist.

Die Lösung des Problems ergibt sich durch die Gegenstände mit den Merkmalen der Patentansprüche 1 und 5. Der Antrieb von Hilfsaggregaten, insbesondere bei Kraftfahrzeugen, mit mindestens einem Antriebsgetriebe, wobei das Antriebsgetriebe über eine lösbare mechanische Verbindung mit einer Verbrennungskraftmaschine koppelbar ist, umfassend mindestens eine Elektromaschine, wobei die Elektromaschine sowohl als Elektromotor als auch als Generator betreibbar ist, und die Elektromaschine mit mindestens einem Hilfsaggregat, insbesondere einem Klimakompressor, antriebskoppelbar ist, erfolgt über eine Vorrichtung, welche dadurch gekennzeichnet ist, dass die Elektromaschine mit mindestens einer mechanischen Verbindung zu der Verbrennungskraftmaschine ausgebildet ist, wobei die Verbindung mindestens derart herstellbar ist, dass die Elektromaschine durch die Verbrennungskraftmaschine antreibbar ist, und die Verbindung mindestens derart lösbar ist, dass keine Bewegung von der Elektromaschine auf die Verbrennungskraftmaschine übertragen wird, und die Elektromaschine mit mindestens einer mechanischen Verbindung zu dem Antriebsgetriebe ausgebildet ist, wobei die Verbindung, vorzugsweise mit einer Kupplung ausgebildet, lösbar und herstellbar ist.

Durch Herstellen oder Lösen der jeweiligen mechanischen Verbindungen ist ein Antrieb des Hilfsaggregates elektromotorisch, verbrennungsmotorisch oder kinematisch unter Schwungsausnutzung sowie durch Kombinationen realisierbar.

Die Elektromaschine kann bei gattungsgemäßen Kraftfahrzeugen Teil eines Hybridantriebs sein, durch welchen das Antriebsgetriebe verbrennungsmotorisch und/oder elektromotorisch antreibbar ist. Bei elektromotorischern Betrieb der Elektromaschine ist ein ausschließlich elektromotorischer Antrieb des Hilfsaggregates und/oder des Antriebsgetriebes realisierbar. Hierfür ist die mechanische Verbindung zwischen der Elektromaschine und der Verbrennungskraftmaschine gelöst.

Durch Schließen der jeweiligen mechanischen Verbindung wird das Hilfsaggregat und/oder das Antriebsgetriebe elektromotorisch angetrieben.

In einer Schwungsausnutzungsphase ist die mechanische Verbindung zwischen Verbrennungskraftmaschine und Antriebsgetriebe unterbrochen. Das Hilfsaggregat kann dabei kinematisch betrieben werden. Dafür ist die mechanische Verbindung zwischen Elektromaschine und Antriebsgetriebe geschlossen. Die Elektromaschine dient der Bewegungsübertragung und wird als Generator betrieben. Übersteigt der Energiebedarf die Energieversorgung durch Schwungsausnutzung, so kann die Elektromaschine unterstützend als Motor betrieben werden oder die Verbindung zwischen Elektromaschine und Antriebsgetriebe gelöst werden und der Antrieb des Hilfsaggregates über die motorisch betriebene Elektromaschine erfolgen.

Dabei sind die Verbrennungskraftmaschine, die Elektromaschine, das Hilfsaggregat und das Antriebsgetriebe mit koaxialen Drehachsen ausgebildet, wobei die Drehachsen in Reihe angeordnet sind. In dieser Anordnung lässt sich bei ausreichendem axialen Bauraum die Zahl der eingesetzten Komponenten weiter verringern, da kein separater Antrieb des Hilfsaggregates notwendig ist. Das Hilfsaggregat ist dabei auch als ein Element der mechanischen Verbindung für eine Bewegungsübertragung zwischen dem Antriebsgetriebe und der Elektromaschine eingesetzt.

Damit ist ein vielfältiger Einsatz der Vorrichtung für einen bedarfsgerechten Antrieb des Hilfsaggregats möglich. Weitere vorteilhafte Ausgestaltungen der Erfindung ergeben sich aus den Unteransprüchen.

Soll die Elektromaschine zusätzlich zu dem Antrieb des Hilfsaggregates lediglich als Lichtmaschine dienen und/oder als Teil eins Hybridantriebs ausgebildet sein, so kann die Anbindung der Verbrennungskraftmaschine an die Elektromaschine über einen Freilauf realisiert werden. Diese Ausführung der mechanischen Verbindung als Freilauf ist kostengünstig realisierbar.

In einer bevorzugten Ausführungsform ist die Elektromaschine als Startergenerator ausgebildet, wodurch sich die Anzahl der im Fahrzeug einzusetzenden Komponenten weiter verringert. Soll die Elektromaschine auch eine Anlasserfunktion für die Verbrennungskraftmaschine wahrnehmen, so muss eine mechanische Verbindung zwischen Elektro- und Verbrennungskraftmaschine gewählt werden, welche eine Kraft- und/oder Bewegungsübertragung der Elektromaschine auf die Verbrennungskraftmaschine erlaubt.

Die Erfindung wird nachfolgend anhand von Ausführungsbeispielen näher erläutert. Die Abbildungen zeigen in schematischen Darstellungen:
- Fig. 1(a): eine Anordnung zur Erläuterung des Hintergrundes der Erfindung der Komponenten für einen Antrieb eines Hilfsaggregates bei Fahrzeugen mit einem Antriebsgetriebe, welches über eine lösbare mechanische Verbindung mit einer Verbrennungskraftmaschine koppelbar ist,
- Fig. 1(b): eine Konfiguration für einen verbrennungsmotorischen Antrieb des Hilfsaggregates bei einer Anordnung gemäß Fig. 1(a),
- Fig. 1(c): eine Konfiguration für einen elektromotorischen Antrieb des Hilfsaggregates bei einer Anordnung gemäß Fig. 1(a),
- Fig. 1(d): eine Konfiguration für einen Antrieb unter Schwungausnutzung des Hilfsaggregates bei einer Anordnung gemäß Fig. 1(a) und
- Fig. 2: eine Reihenanordnung der Komponenten bei koaxialer Ausbildung der Drehachsen.

Der erfindungsgemäße Antrieb des Hilfsaggregates ist bei Kraftfahrzeugen einsetzbar, welche mindestens verbrennungsmotorisch und - durch eine Unterbrechung der Verbindung zwischen Antriebsgetriebe und Verbrennungskraftmaschine - unter Schwungausnutzung betreibbar sind.

Der Einsatz ist auch in einem Hybridantrieb denkbar, wobei das Antriebsgetriebe zusätzlich elektromotorisch antreibbar ist.

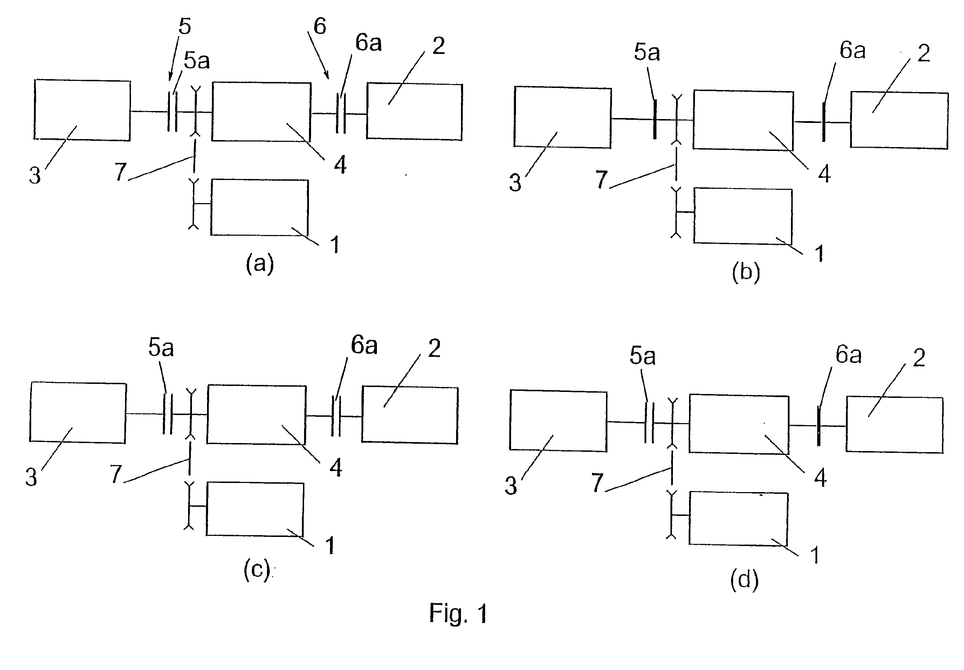

Fig. 1(a) zeigt die Basiskonfiguration einer Anordnung für einen Antrieb eines Hilfsaggregates 1 über eine als Generator oder Elektromotor betreibbare Elektromaschine 4. Die Elektromaschine 4 ist über mechanische Verbindungen 5, 6, welche mit Kupplungen 5a, 6a, ausgebildet sind, zum Einen mit einer Verbrennungskraftmaschine 3, zum Anderen mit einem Antriebsgetriebe 2 koppelbar. Eine mechanische Verbindung 7 zwischen Hilfsaggregat 1 und Elektromaschine 4 ist in der dargestellten Ausführungsform mit einem Riementrieb ausgebildet.

Die Elektromaschine 4 kann beispielsweise als Startergenerator mit einem außenliegenden Rotor ausgebildet sein, wobei der Rotor als Schwungrad ausgebildet ist. Durch Schließen der Kupplung 5a - und damit der mechanischen Verbindung 5 - ist die Verbrennungskraftmaschine 3 durch die motorisch betriebene Elektromaschine 4 anlassbar.

Die Fig.1 (b) bis (d) zeigen verschiedene Konfigurationen für einen verbrennungsmotorisch (b), elektromotorisch (c) oder unter Schwungsausnutzung (d) erfolgenden Antrieb des Hilfsaggregates 1 über die Elektromaschine 4 bei einer Anordnung der Komponenten 1,2,3,4,5a, 6a, 7 gemäß der in Fig. 1 (a) dargestellten Basiskonfiguration.

In dem in Fig. 1(b) dargestellten verbrennungsmotorischen Fahrzeugbetrieb sind die Kupplung 5a zwischen der Verbrennungskraftmaschine 3 und der Elektromaschine 4 und die Kupplung 6a zwischen der Elektromaschine 4 und dem Antriebsgetriebe 2 geschlossen. In dieser Anordnung ist sowohl das Antriebsgetriebe 2 als auch das Hilfsaggregat 1 durch den Verbrennungsmotor 2 antreibbar. Die Antriebsleistung ist über die Elektromaschine 4 auf das Antriebsgetriebe 2 und das Hilfsaggregat 1 übertragbar. Die Elektromaschine 4 wird bei verbrennungsmotorischem Fahrzeugbetrieb bevorzugt als Generator betrieben. Im Generatorbetrieb kann - zusätzlich zu der Übertragung der Antriebsleistung - ein nicht dargestellter Akkumulator durch die im Generatorbetrieb gewonnene elektrische Energie gespeist werden. Daneben ist bei dem in Fig.1(b) dargestellten verbrennungsmotorischen Fahrzeugbetrieb auch ein Motorbetrieb der Elektromaschine 4 möglich. Durch den zusätzlichen Motorbetrieb der Elektromaschine 4 ist die Antriebsleistung aus der Verbrennungskraftmaschine 3 steigerbar.

Fig. 1(c) zeigt die Konfiguration für einen elektromotorischen Antrieb des Hilfsaggregates 1 durch die motorisch betriebene Elektromaschine 4 wie er beispielsweise im Fahrzeugstillstand bei stillgesetzter Verbrennungskraftmaschine 3 einsetzbar ist. Die Kupplungen 5a, 6a sind offen, so dass eine Bewegungsübertragung von der Elektromaschine 4 auf die Verbrennungskraftmaschine 3 und von der Elektromaschine 4 auf das Antriebsgetriebe 2 unterbunden ist.

Für einen elektromotorischen Antrieb des Antriebsgetriebes 2 durch die Elektromaschine 4 wird ausgehend von der in Fig.1(c) dargestellten Anordnung die mechanische Verbindung zwischen Antriebsgetriebe 2 und Elektromaschine 4 durch Schließen der Kupplung 6a geschlossen.

Für ein Anlassen der Verbrennungskraftmaschine 3 durch eine als Startergenerator ausgebildete Elektromaschine 4 wird ausgehend von der in Fig.1(c) dargestellten Anordnung die mechanische Verbindung zwischen Verbrennungskraftmaschine 3 und Elektromaschine 4 durch Schließen der Kupplung 5a geschlossen.

In der in Fig. 1(d) dargestellten Schwungausnutzungsphase ist kein Antrieb des Antriebsgetriebes 2 durch die Verbrennungskraftmaschine 3 und/oder einen motorischen Betrieb der Elektromaschine 4 für eine Fahrzeugsollbewegung erforderlich. Die Verbrennungskraftmaschine 3 kann in dieser Phase für einen umweltfreundlichen Kraftfahrzeugbetrieb stillgesetzt werden und die Elektromaschine 4 ist bevorzugt als Generator betrieben. Die Verbindung zwischen Verbrennungskraftmaschine 3 und Elektromaschine 4 ist derart unterbrochen, dass keine Bewegungsübertragung von der Elektromaschine 4 auf die Verbrennungskraftmaschine 3 erfolgt. Die Verbindung zwischen Antriebsgetriebe 2 und Elektromaschine 4 ist in dem dargestellten Betriebsfall über die geschlossene Kupplung 6a hergestellt. Dadurch kann die kinetische Energie aus der Kraftfahrzeugbewegung zum Einen in der als Generator betriebenen Elektromaschine 4 in elektrische Energie umgesetzt werden, zum Anderen ist die Bewegung über die Elektromaschine 4 bei geschlossener mechanischer Verbindung 7 auf das Hilfsaggregat 1 übertragbar und somit für den Antrieb des Hilfsaggregates 1 verwendbar. Ist die ausschließliche Energieversorgung des Hilfsaggregates 1 und des Antriebsgetriebes 2 durch die Kraftfahrzeugbewegung nicht ausreichend, so kann die Elektromaschine 4 zusätzlich als Motor betrieben werden.

Sinkt die Energieversorgung aus der Schwungausnutzung unter ein bestimmtes Niveau, so ist für den elektromotorischen Kraftfahrzeugbetrieb die Leistung der Elektromaschine 4 auf das Antriebsgetriebe 2 übertragbar. Alternativ kann die Verbrennungskraftmaschine 3 wieder gestartet werden. Ist die Elektromaschine als Startergenerator ausgeführt und die mechanische Verbindung zwischen Elektromaschine 4 und Verbrennungskraftmaschine 3 beispielsweise mit einer Kupplung 5a ausgebildet, so kann die Verbrennungskraftmaschine durch Schließen der Kupplung 5a angelassen werden.

Ist die Verbindung 7 zwischen Hilfsaggregat und Elektromaschine mit einer nicht dargestellten Kupplung ausgebildet, so kann für zeitweise Leistungssteigerungen die Verbindung 7 unterbrochen werden und die verbrennungsmotorische, elektromotorische und/oder kinetische Energie ausschließlich für den Kraftfahrzeugantrieb genutzt werden.

Soll durch die eingesetzten Komponenten keine Anlasserfunktion wahrgenommen werden, so ist die in Fig. 1(a) dargestellte Verbindung 5 als Freilauf realisierbar. Über einen Freilauf ist die Bewegung von der Verbrennungskraftmaschine 3 auf die Elektromaschine 4 übertragbar, nicht jedoch die Bewegung von der Elektromaschine 4 auf die Verbrennungskraftmaschine 3.

Die Anordnung der Komponenten im Kraftfahrzeug ist abhängig von den Eigenarten des jeweiligen Kraftfahrzeugtyps.

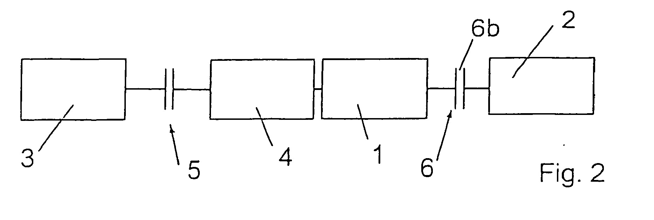

Fig. 2 zeigt eine Anordnung der Verbrennungskraftmaschine 3, der Elektromaschine 4, des Hilfsaggregates 1 und des Antriebsgetriebes 2 in Reihe, wobei die Komponenten mit koaxialen Drehachsen ausgebildet sind.

Die Verbrennungskraftmaschine 3 ist über die Verbindung 5 mit der Elektromaschine 4 gekoppelt. Das Hilfsaggregat 1 dient in dieser Ausführungsform auch als Element der mechanischen Verbindung 6 zwischen Elektromaschine 4 und Antriebsgetriebe. Zusätzlich ist die Verbindung 6 mit einer Kupplung 6b ausgebildet, welche zwischen dem Hilfsaggregat 1 und dem Antriebsgetriebe 2 angeordnet ist. Bei Kraftfahrzeugtypen mit ausreichendem axialen Bauraum bietet diese Anordnung die Möglichkeit, einen separaten Antrieb des Hilfsaggregates 1 entfallen zu lassen.

Die Auslegung eines als Hilfsaggregat 1 eingesetzten Klimakompressors und dessen Antrieb kann in allen Ausführungsformen gezielt wirkungsgradoptimiert erfolgen, da das jeweilige System nicht auf die Leerlaufdrehzahl der Verbrennungskraftmaschine 3 abgestimmt werden muss.

Nicht dargestellt in den Ausführungsformen sind die jeweiligen Anschlüsse der Verbindungselemente, insbesondere der Verbindungen 5, 6, an eine ebenfalls nicht dargestellte Steuereinrichtung. Die Steuereinrichtung liefert die Entsprechenden Signale für ein Öffnen und/oder Schließen der jeweiligen Kupplungen für eine Umsetzung eines gewünschten Fahrzeugbetriebs. Ist die Verbindung 5 mit einem Freilauf ausgebildet, so ist an dieser Stelle kein zusätzliches Steuersignal notwendig.

## Patentansprüche

1. Vorrichtung für den Antrieb von Hilfsaggregaten (1), insbesondere bei Kraftfahrzeugen, mit mindestens einem Antriebsgetriebe (2), wobei das Antriebsgetriebe (2) über eine lösbare mechanische Verbindung mit einer das Antriebsgetriebe antreibenden Verbrennungskraftmaschine (3) koppelbar ist, umfassend mindestens eine Elektromaschine (4), wobei die Elektromaschine (4) sowohl als Elektromotor als auch als Generator betreibbar ist, die Elektromaschine (4) mit mindestens einem Hilfsaggregat (1) über eine mechanische Verbindung (7) antriebskoppelbar ist und mit mindestens einer mechanischen Verbindung (5) zu der Verbrennungskraftmaschine (3) ausgebildet ist, wobei die Verbindung (5) mindestens derart herstellbar ist, dass die Elektromaschine (4) durch die Verbrennungskraftmaschine (3) antreibbar ist, und die Verbindung (5) mindestens derart lösbar ist, dass keine Bewegung von der Elektromaschine (4) auf die Verbrennungskraftmaschine (3) übertragen wird, die Elektromaschine (4) mit mindestens einer mechanischen Verbindung (6) zu dem Antriebsgetriebe (2) ausgebildet ist, wobei die Verbindung (6) wahlweise lösbar und herstellbar ist und durch Herstellen oder Lösen der jeweiligen mechanischen Verbindungen (5, 6) ein Antrieb des Hilfsaggregates elektromotorisch, verbrennungsmotorisch oder kinematisch unter Schwungsausnutzung sowie durch Kombinationen realisiert wird,
**dadurch gekennzeichnet, dass**
die Verbrennungskraftmaschine (3), die Elektromaschine (4), das Hilfsaggregat (1) und das Antriebsgetriebe (2) mit koaxialen Drehachsen ausgebildet sind, wobei die Drehachsen in Reihe angeordnet sind.

2. Vorrichtung nach Anspruch 1, **dadurch gekennzeichnet, dass** die Verbindung (5) zwischen der Elektromaschine (4) und der Verbrennungskraftmaschine (3) mit einem Freilauf ausgebildet ist.

3. Vorrichtung nach Anspruch 1, **dadurch gekennzeichnet, dass** die Elektromaschine (4) als ein Startergenerator ausgebildet ist und die mechanische Verbindung (5) zwischen Verbrennungskraftmaschine (3) und Elektromaschine (4) wahlweise lösbar oder herstellbar ist.

4. Vorrichtung nach einem der vorangegangenen Ansprüche, **dadurch gekennzeichnet, dass** die Anbindung des Hilfsaggregates (1) an die Elektromaschine (4) mit einer Kupplung ausgebildet ist.

5. Verfahren zum Antrieb eines Hilfsaggregates (1) mittels einer Vorrichtung nach einem der vorangegangenen Ansprüche,
**dadurch gekennzeichnet,**
**dass** bei eingeschaltetem Hilfsaggregat (1) die Verbindung zwischen der Elektromaschine (4) und Hilfsaggregat (1) geschlossen ist,
**dass** bei laufender Verbrennungskraftmaschine (3) und eingeschaltetem Hilfsaggregat (1) die Verbindung zwischen Verbrennungskraftmaschine (3) und Hilfsaggregat (1) antreibend geschlossen ist, wobei für einen Kraftfahrzeugstillstand die Verbindung (6) zwischen Elektromaschine (4) und Antriebsgetriebe (2) gelöst ist, und für einen Antrieb des Antriebgetriebes (2) die Verbindung (6) zwischen Elektromaschine (4) und Antriebsgetriebe (2) geschlossen ist, und
**dass** bei stillstehender Verbrennungskraftmaschine (3) die Verbindung (5) zwischen Verbrennungskraftmaschine (3) und Elektromaschine (4) derart gelöst ist, dass keine Bewegung von der Elektromaschine (4) auf die Verbrennungskraftmaschine (3) übertragen wird, wobei bei Kraftfahrzeugstillstand die Verbindung (6) zwischen Elektromaschine (4) und Antriebsgetriebe (2) gelöst ist, und bei Schwungausnutzung die Verbindung (6) zwischen Elektromaschine (4) und Antriebsgetriebe (2) geschlossen ist.

## Claims

1. Apparatus for driving auxiliary units (1), in particular in motor vehicles, having at least one drive gear (2), it being possible to couple the drive gear (2) to an internal combustion engine (3), which drives the drive gear, by means of a releasable mechanical connection, comprising at least one electrical machine (4), it being possible for the electrical machine (4) to be operated both as an electric motor and as a generator, it being possible to drive-couple the electrical machine (4) to at least one auxiliary unit (1) by means of a mechanical connection (7) and the said electrical machine (4) being formed with at least one mechanical connection (5) to the internal combustion engine (3), it being possible for the connection (5) to be established at least in such a way that the electrical machine (4) can be driven by the internal combustion engine (3), and it being possible for the connection (5) to be released at least in such a way that no movement is transmitted from the electrical machine (4) to the internal combustion engine (3), the electrical machine (4) being formed with at least one mechanical connection (6) to the drive gear (2), it being possible for the connection (6) to be selectively released and established and the auxiliary unit being driven by the electric motor, by the internal combustion engine or kinematically with momentum utilization or by combinations of the above by the respective mechanical connections (5, 6) being established or released,
**characterized in that**
the internal combustion engine (3), the electrical machine (4), the auxiliary unit (1) and the drive gear (2) are formed with coaxial rotary shafts, with the rotary shafts being arranged in a row.

2. Apparatus according to Claim 1, **characterized in that** the connection (5) between the electrical machine (4) and the internal combustion engine (3) is formed with a freewheel.

3. Apparatus according to Claim 1, **characterized in that** the electrical machine (4) is formed as a starter generator and the mechanical connection (5) between the internal combustion engine (3) and the electrical machine (4) can be selectively released or established.

4. Apparatus according to one of the preceding claims, **characterized in that** the connection of the auxiliary unit (1) to the electrical machine (4) is formed by a clutch.

5. Method for driving an auxiliary unit (1) by means of an apparatus according to one of the preceding claims,
**characterized**
**in that** the connection between the electrical machine (4) and the auxiliary unit (1) is closed when the auxiliary unit (1) is switched on,
**in that** the connection between the internal combustion engine (3) and the auxiliary unit (1) is closed in a driven manner when the internal combustion engine (3) is running and the auxiliary unit (1) is switched on, with the connection (6) between the electrical machine (4) and the drive gear (2) being released for stopping the motor vehicle, and the connection (6) between the electrical machine (4) and the drive gear (2) being closed for driving the drive gear (2), and
**in that**, when the internal combustion engine (3) is stationary, the connection (5) between the internal combustion engine (3) and the electrical machine (4) is released in such a way that no movement is transmitted from the electrical machine (4) to the internal combustion engine (3), with the connection (6) between the electrical machine (4) and the drive gear (2) being released when the motor vehicle is stationary, and the connection (6) between the electrical machine (4) and the drive gear (2) being closed when momentum is utilized.

## Revendications

1. Dispositif pour l'entraînement d'unités auxiliaires (1), notamment dans des véhicules automobiles, comprenant au moins un mécanisme d'entraînement (2), le mécanisme d'entraînement (2) pouvant être accouplé, par le biais d'une connexion mécanique desserrable, à un moteur à combustion interne (3) entraînant le mécanisme d'entraînement, comprenant au moins une machine électrique (4), la machine électrique (4) pouvant fonctionner à la fois comme moteur électrique et comme générateur, la machine électrique (4) pouvant être accouplée en entraînement à au moins une unité auxiliaire (1) par le biais d'une connexion mécanique (7) et étant réalisée avec au moins une connexion mécanique (5) au moteur à combustion interne (3), la connexion (5) étant au moins réalisable de telle sorte que la machine électrique (4) puisse être entraînée par le moteur à combustion interne (3), et la connexion (5) pouvant être au moins desserrée de telle sorte qu'aucun mouvement de la machine électrique (4) ne soit transmis au moteur à combustion interne (3), la machine électrique (4) étant réalisée avec au moins une connexion mécanique (6) au mécanisme d'entraînement (2), la connexion (6) pouvant être desserrée et établie au choix et un entraînement de l'unité auxiliaire pouvant être réalisé par moteur électrique, par moteur à combustion interne, ou par voie cinématique en utilisant l'inertie, ainsi que par des combinaisons, en établissant ou en desserrant les connexions mécaniques respectives (5, 6),
**caractérisé en ce que**
le moteur à combustion interne (3), la machine électrique (4), l'unité auxiliaire (1) et le mécanisme d'entraînement (2) sont réalisés avec des axes de rotation coaxiaux, les axes de rotation étant alignés.

2. Dispositif selon la revendication 1, **caractérisé en ce que** la connexion (5) entre la machine électrique (4) et le moteur à combustion interne (3) est réalisée avec une roue libre.

3. Dispositif selon la revendication 1, **caractérisé en ce que** la machine électrique (4) est réalisée sous forme de générateur de démarrage et la connexion mécanique (5) entre le moteur à combustion interne (3) et la machine électrique (4) peut être desserrée ou établie au choix.

4. Dispositif selon l'une quelconque des revendications précédentes, **caractérisé en ce que** la liaison de l'unité auxiliaire (1) à la machine électrique (4) est réalisée avec un embrayage.

5. Procédé pour l'entraînement d'une unité auxiliaire (1) au moyen d'un dispositif selon l'une quelconque des revendications précédentes,
**caractérisé en ce que**
lorsque l'unité auxiliaire (1) est enclenchée, la connexion entre la machine électrique (4) et l'unité auxiliaire (1) est fermée,
**en ce que**, lorsque le moteur à combustion interne (3) tourne et que l'unité auxiliaire (1) est enclenchée, la connexion entre le moteur à combustion interne (3) et l'unité auxiliaire (1) est fermée avec entraînement, et dans le cas d'un arrêt du véhicule automobile, la connexion (6) entre la machine électrique (4) et le mécanisme d'entraînement (2) est desserrée, et pour un entraînement du mécanisme d'entraînement (2), la connexion (6) entre la machine électrique (4) et le mécanisme d'entraînement (2) est fermée, et
**en ce que**, lorsque le moteur à combustion interne (3) est arrêté, la connexion (5) entre le moteur à combustion interne (3) et la machine électrique (4) est desserrée de telle sorte qu'aucun mouvement de la machine électrique (4) au moteur à combustion interne (3) ne soit transmis, et lorsque le véhicule automobile est arrêté, la connexion (6) entre la machine électrique (4) et le mécanisme d'entraînement (2) est desserrée, et en cas d'utilisation de l'inertie, la connexion (6) entre la machine électrique (4) et le mécanisme d'entraînement (2) est fermée.
